# FASCICULE DE BREVET EUROPEEN

(11) **EP 2 126 440 B1**
(45) Date de publication et mention de la délivrance du brevet: **15.05.2013**
(21) Numéro de dépôt: 07872415.0
(22) Date de dépôt: 20.12.2007
(51) Int. Cl.: F16L 13/02, F16L 41/08, B21D 19/16

(54) **PROCEDE DE RACCORDEMENT PAR SOUDAGE PAR FRICTION D'UN ELEMENT ET D'UNE EXTREMITE RETOURNEE D'UN TUBE MULTICOUCHE**
VERFAHREN ZUR VERBINDUNG EINES ELEMENTS MIT DEM UMGEKEHRTEN ENDE EINES MEHRSCHICHTIGEN ROHRS MITTELS REIBSCHWEISSEN
METHOD FOR CONNECTING BY FRICTION WELDING A MEMBER TO THE REVERTED END OF A MULTILAYERED TUBE

(30) Priorité: 29.01.2007 FR 0700598
(43) Date de publication de la demande: 02.12.2009
(73) Titulaire: PARKER HANNIFIN MANUFACTURING France SAS, 74100 Ville-la-Grand (FR)
(72) Inventeur: BLIVET, Philippe, F-35200 Rennes (FR)
(74) Mandataire: Robert, Jean-Pierre
(86) Numéro de dépôt international: PCT/FR2007/002130
(87) Numéro de publication internationale: WO 2008/096060

(56) Documents cités:
- EP-A- 0 882 530
- DE-A1- 19 548 542
- DE-C- 703 392
- GB-A- 2 226 861
- US-A1- 2004 035 504
- US-B1- 6 705 148
- US-B1- 6 832 785

## Description

La présente invention concerne, voir US 6 832 785 B1 selon le préambule de la revendication 1, un procédé de raccordement d'une portion d'extrémité d'un tube multicouche à un canal d'un élément. Le tube et l'élément peuvent être destinés à faire partie d'un circuit de transport de fluide. L'élément peut ainsi être un élément émetteur ou récepteur de fluide comme une canalisation, un embout, un raccord, une pompe, un réservoir, une vanne, un distributeur...

Il est connu un procédé de raccordement d'un tube multicouche à un canal d'un élément de circuit par soudage par friction. Le tube comporte, au moins sur une portion d'extrémité, une couche de surface soudable à une paroi dédiée de l'élément de circuit. La paroi est une surface sensiblement annulaire agencée dans le canal de l'élément. Un tel procédé comprend les étapes de mettre en contact une partie de la couche de surface de la portion d'extrémité avec la paroi de l'élément de circuit et de faire frotter cette partie de la couche de surface contre la paroi jusqu'à souder par friction la portion d'extrémité du tube à l'élément de circuit. La paroi présente en général une forme tronconique avec une légère pente pour serrer légèrement le tube et augmenter les frottements. Si la couche de surface est recouverte par au moins une autre couche du côté de la paroi de l'élément de circuit, la couche de surface étant par exemple située à l'intérieur du tube tandis que la paroi est la paroi délimitant le canal de l'élément dans lequel la portion d'extrémité est destinée à être introduite, il est nécessaire de préalablement mettre à nu la couche de surface en ôtant, par exemple par découpe, une partie de la couche qui la recouvre. Il en résulte cependant un affaiblissement structurel du tube qui, d'une part, peut conduire à un écrasement du tube lors du soudage par friction et, d'autre part, fait naître pour l'avenir un risque de fuite en dégradant notamment les résistances mécanique, chimique et thermique du tube dans cette zone.

L'invention a pour but l'obtention de raccordements de tubes multicouches par soudage par friction, qui soient résistants et relativement faciles à réaliser.

A cet effet, on prévoit, selon l'invention, un procédé de raccordement d'une portion d'extrémité d'un tube multicouche à un canal d'un élément, au moins la portion d'extrémité du tube comportant une couche de surface soudable à au moins une paroi sensiblement annulaire de l'élément, le procédé comprenant l'étape de faire frotter la partie de la couche de surface de la portion d'extrémité du tube contre la paroi de l'élément pour souder par friction la portion d'extrémité du tube à l'élément, le procédé comprend en outre l'étape préalable de retourner la portion d'extrémité sur elle-même de telle manière que la partie de la couche de surface de la portion d'extrémité s'étende en regard de la paroi de l'élément.

Après le retournement de la portion d'extrémité, la portion d'extrémité possède deux parties rabattues, retroussées ou repliées l'une sur l'autre de sorte que la couche de surface soudable est apparente tant à l'extérieur qu'à l'intérieur de la portion d'extrémité retournée. Ainsi, la couche de surface soudable est amenée en regard de la paroi dédiée de l'élément, sans nécessiter un enlèvement de matière, par le simple retournement de la portion d'extrémité sur elle-même. En outre, la portion d'extrémité ainsi retournée présente une épaisseur double qui augmente sa résistance.

Selon trois modes de mise en oeuvre particuliers :
- la couche de surface est située d'un côté externe du tube et la portion d'extrémité est retournée vers l'intérieur du tube.
- la couche de surface est située d'un côté interne du tube et la portion d'extrémité est retournée vers l'extérieur du tube.
- l'élément comporte deux parois sensiblement annulaires et coaxiales l'une à l'autre agencées de telle manière que la couche de surface soit en contact avec les deux parois lors du soudage par friction, à l'intérieur et à l'extérieur de la portion d'extrémité retournée.

Différentes configurations de raccordement sont ainsi possibles. La résistance du raccordement résultant du troisième mode de réalisation est relativement élevée.

Selon un quatrième mode de mise en oeuvre particulier, l'élément est une portion d'extrémité d'un deuxième tube, le procédé comprend les étapes de tuliper cette portion d'extrémité du deuxième tube, de retourner vers l'extérieur la portion d'extrémité du premier tube, la couche de surface soudable étant située initialement à l'intérieur du premier tube, d'introduire la portion d'extrémité retournée du premier tube dans la portion d'extrémité tulipée du deuxième tube et de souder par friction celles-ci l'une à l'autre.

Un raccordement solide de deux tubes est alors réalisé.

Selon un mode de fabrication particulier, le retournement est réalisé en appliquant la portion d'extrémité du tube contre un outil comprenant une surface de conformation formée d'une gorge annulaire plane ayant un fond incurvé pour amorcer le retournement et bordé par un premier flanc formé d'une surface cylindrique coaxiale de guidage de la portion d'extrémité du tube vers le fond de la gorge et un deuxième flanc divergeant par rapport au premier flanc et, avantageusement, le retournement comprend une phase de réalisation d'une ébauche au moyen dudit outil, la portion d'extrémité ébauchée formant un angle aigu avec une partie non retournée du tube, et une phase de finition en appliquant la portion d'extrémité ébauchée contre un deuxième outil comprenant une surface cylindrique de guidage de la portion d'extrémité du tube vers une butée annulaire coaxiale agencée pour rabattre la partie retournée contre la partie non retournée du tube.

Le retournement est alors effectué de manière simple et efficace, éventuellement en deux phases si le matériau du tube le rend nécessaire. Il est en outre possible d'effectuer le retournement à chaud de manière à ramollir le tube et éviter une détérioration de celui-ci.

L'invention a également pour objet un ensemble d'un tube raccordé à un canal d'un élément, voir US 6 832 785 B1 selon le préambule de la revendication revendication 10. L'invention prévoit que le tube possède une portion d'extrémité retournée ayant une couche de surface soudée à au moins une paroi de l'élément.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue en coupe longitudinale d'un ensemble conforme à un premier mode de réalisation de l'invention ;
- la figure 2 est une vue en coupe longitudinale d'un ensemble conforme à un deuxième mode de réalisation de l'invention ;
- la figure 3 est une vue en coupe longitudinale d'un ensemble conforme à un troisième mode de réalisation de l'invention, au cours de l'assemblage ;
- la figure 4 est une vue en coupe longitudinale d'un ensemble conforme à un quatrième mode de réalisation de l'invention, avant assemblage ;
- la figure 5 est une vue schématique décomposant le retournement de la portion d'extrémité.

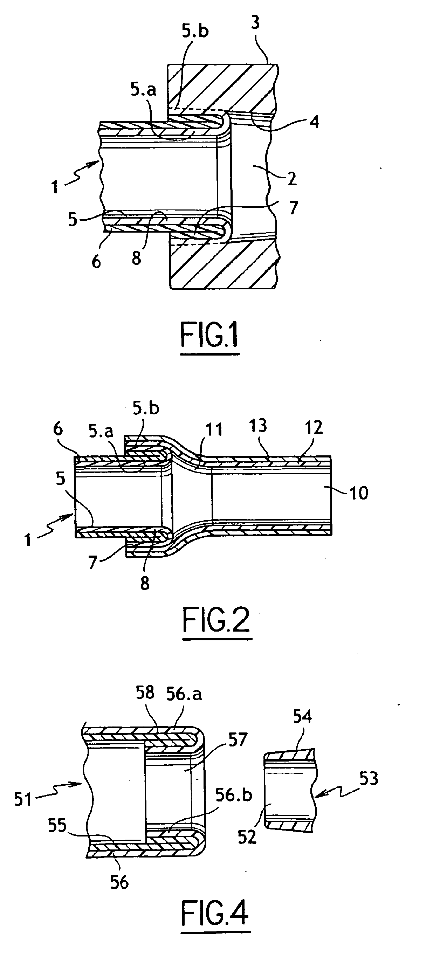

En référence à la figure 1, l'ensemble conforme au premier mode de réalisation de l'invention comprend un tube, généralement désigné en 1, raccordé à une extrémité 2 d'un canal d'un élément 3, ici un élément de circuit de transport de fluide. L'extrémité de canal 2 est délimitée par une paroi 4 sensiblement annulaire. Plus précisément, la paroi 4 est légèrement tronconique, s'évasant vers le débouché de l'extrémité de canal 2.

Le tube 1 est un tube multicouche comportant une couche de surface interne 5 et une couche de surface externe 6. La couche de surface interne 5 est en un matériau soudable au matériau de la paroi 4 : la paroi 4 et la couche de surface interne 5 sont par exemple dans le même matériau thermoplastique. Le tube 1 possède une portion d'extrémité 7 retournée vers l'extérieur. La portion d'extrémité 7 est ici retournée à 180°, c'est-à-dire que la portion d'extrémité 7 est appliquée contre une partie adjacente non retournée 8 du tube 1. Ainsi, la couche de surface interne 5 comporte, au niveau de la portion d'extrémité 7, une partie 5.a s'étendant d'un côté intérieur au tube et une partie 5.b s'étendant d'un côté extérieur au tube 1. La partie 5.b de la couche de surface interne 7 est soudée à la paroi 4 de l'élément 3.

La réalisation de cet ensemble résulte de la mise en oeuvre d'un procédé de raccordement comprenant une étape de retournement de la portion d'extrémité 7 du tube 1 et une étape de soudage par friction de la portion d'extrémité 7 à l'élément 3.

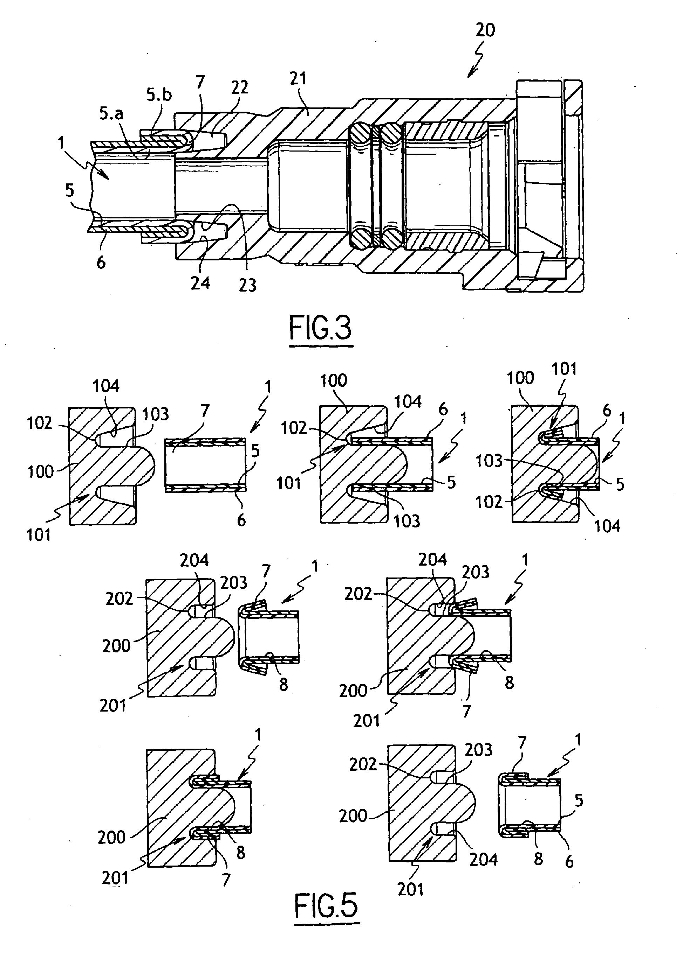

Le retournement est réalisé en une phase d'ébauche et une phase de finition (voir la figure 5).

La phase d'ébauche consiste à appliquer la portion d'extrémité 7 du tube 1 contre un outil 100 comprenant une surface de conformation formée d'une gorge annulaire plane, généralement désignée en 101, ayant un fond incurvé 102 pour amorcer le retournement et bordé, ici à l'intérieur, par un premier flanc 103 formé d'une surface cylindrique coaxiale de guidage de la portion d'extrémité 7 du tube 1 vers le fond 102 de la gorge 101 et, à l'extérieur, par un deuxième flanc 104 divergeant par rapport au premier flanc 103. A l'issue de la phase d'ébauche, la portion d'extrémité 7 ébauchée forme un angle aigu avec la partie adjacente non retournée 8 du tube 1.

La phase de finition consiste à appliquer la portion d'extrémité 7 ébauchée contre un deuxième outil 200 comprenant une surface de conformation constituée d'une gorge annulaire plane, généralement désignée en 201, ayant un fond incurvé 202 pour former le bord terminal de la portion d'extrémité 7 et bordé, ici à l'intérieur, par un premier flanc 203 formé d'une surface cylindrique de guidage de la portion d'extrémité du tube dans la gorge 201 et, à l'extérieur, par un deuxième flanc 204 formé d'une surface cylindrique qui est coaxiale au premier flanc et dont le bord opposé au fond 202 forme une butée annulaire coaxiale agencée pour rabattre la portion d'extrémité 7 ébauchée contre la partie adjacente non retournée 8 du tube 1.

Le retournement peut être effectué à chaud ou à froid, ou en une seule phase, selon les propriétés mécaniques du tube (souplesse, matériau, présence d'une couche métallique...). Le retournement peut également être fait en une seule phase si la portion d'extrémité 7 ne doit pas être appliquée contre la partie adjacente non retournée 8.

Le procédé se poursuit par l'étape de faire frotter la partie 5.b de la couche de surface interne 5 de la portion d'extrémité 7 du tube 1 contre la paroi 4 de l'élément 3 pour souder par friction la portion d'extrémité 7 du tube 1 à l'élément 3. Le soudage par friction est réalisé de manière classique, ici par rotation relative de la portion d'extrémité 7 et de l'élément 3.

Les éléments identiques ou analogues porteront des références numériques identiques dans la description qui suit d'autres modes de réalisation de l'ensemble conforme à l'invention.

En référence à la figure 2, l'ensemble conforme au deuxième mode de réalisation comprend un tube 1 identique à celui du premier mode de réalisation. L'élément est un deuxième tube 10 ayant une portion d'extrémité 11 tulipée. Le deuxième tube 10 comprend une couche de surface interne 12 et une couche de surface externe 13. La couche de surface interne 12 est en un matériau soudable avec le matériau de la couche de surface interne 5 du tube 2.

Le procédé de raccordement de l'invention comprend les étapes de tuliper la portion d'extrémité 11 du deuxième tube 10, de retourner vers l'extérieur la portion d'extrémité 7 du premier tube 1 pour mettre la couche de surface interne 5 en regard de la couche de surface interne 12, d'introduire la portion d'extrémité 7 retournée du premier tube 1 dans la portion d'extrémité 11 tulipée du deuxième tube 10 et de souder par friction celles-ci l'une à l'autre.

En référence à la figure 3, l'ensemble conforme au troisième mode de réalisation comprend un tube 1 identique à celui du premier mode de réalisation. L'élément est un raccord 20, connu en lui-même, ayant un corps tubulaire 21 dont une extrémité est pourvue d'une gorge plane 22 ayant un fond bordé intérieurement et extérieurement par des flancs divergents 23, 24 formant des parois soudables respectivement aux parties 5.a, 5.b de la couche de surface interne 5 du tube 1. La soudure reliant les flancs divergents 23, 24 aux parties 5.a, 5.b de la couche de surface interne 5 du tube 1.

Le raccordement du tube 1 au raccord 20 est réalisé comme précédemment.

En variante, il est possible d'effectuer le retournement de la portion d'extrémité directement dans la gorge 22 en prévoyant que cette gorge ait un fond formant une surface amorçant le retournement de la portion d'extrémité (comme sur les outils 100 et 200). L'effort d'introduction de la portion d'extrémité dans la gorge 22 doit être suffisant pour effectuer le retournement et la gorge 22 doit être suffisamment large pour permettre le retournement et accueillir la double épaisseur (le retournement peut ainsi être réalisé immédiatement avant le soudage, voire quasi-simultanément au soudage).

Pour éviter que la soudure n'intervienne avant le retournement de la portion d'extrémité, il est possible d'utiliser une vitesse de rotation moindre pour le retournement (afin de limiter l'échauffement) puis d'accélérer la vitesse de rotation pour effectuer la soudure.

En référence à la figure 4, l'ensemble conforme au quatrième mode de réalisation comprend un tube, généralement désigné en 51, raccordé à une extrémité mâle 52 d'un canal d'un élément 53, ici un élément de circuit de transport de fluide. L'extrémité de canal 52 est délimitée par une paroi 54 sensiblement annulaire et plus précisément légèrement tronconique, s'évasant vers le débouché de l'extrémité de canal 52.

Le tube 51 est un tube multicouche comportant une couche de surface interne 55 et une couche de surface externe 56. La couche de surface externe 56 est en un matériau soudable au matériau de la paroi 54 : la paroi 54 et la couche de surface interne 56 sont par exemple dans le même matériau thermoplastique. Le tube 51 possède une portion d'extrémité 57 retournée vers l'intérieur. La portion d'extrémité 57 est ici retournée à 180°, c'est-à-dire que la portion d'extrémité 57 est appliquée contre une partie adjacente non retournée 58 du tube 1. Ainsi, la couche de surface externe 56 comporte, au niveau de la portion d'extrémité 57, une partie 56.a s'étendant d'un côté extérieur au tube et une partie 56.b s'étendant d'un côté intérieur au tube 1. La partie 56.b de la couche de surface interne 57 est soudée à la paroi 54 de l'élément 53.

Le retournement de la portion d'extrémité 57 est effectué au moyen d'outils analogues à ceux décrits en relation avec le premier mode de réalisation, la surface de guidage étant cette fois à l'extérieur.

Bien entendu, l'invention n'est pas limitée aux modes de réalisation décrits mais englobe toute variante entrant dans le cadre de l'invention telle que définie par les revendications.

## Revendications

1. Procédé de raccordement d'une portion d'extrémité (7, 57) d'un tube (1, 51) multicouche à un canal (2) d'un élément (3, 20), au moins la portion d'extrémité du tube comportant une couche de surface soudable (5) à au moins une paroi (4, 23, 24) sensiblement annulaire de l'élément, le procédé comprenant l'étape de faire frotter la partie de la couche de surface de la portion d'extrémité du tube contre la paroi de l'élément pour souder par friction la portion d'extrémité du tube à l'élément, **caractérisé en ce que** le procédé comprend l'étape préalable de retourner la portion d'extrémité sur elle-même de telle manière que la partie de la couche de surface de la portion d'extrémité s'étende en regard de la paroi de l'élément.

2. Procédé selon la revendication 1, dans lequel la couche de surface (56) est située d'un côté externe du tube (51) et la portion d'extrémité (57) est retournée vers l'intérieur du tube.

3. Procédé selon la revendication 1, dans lequel la couche de surface (5) est située d'un côté interne du tube (1) et la portion d'extrémité (7) est retournée vers l'extérieur du tube.

4. Procédé selon la revendication 1, dans lequel l'élément (20) comporte deux parois (23, 24) sensiblement annulaires et coaxiales l'une à l'autre agencées de telle manière que la couche de surface (5) soit en contact avec les deux parois lors du soudage par friction, à l'intérieur et à l'extérieur de la portion d'extrémité retournée (7).

5. Procédé selon la revendication 1, dans lequel l'élément est une portion d'extrémité (11) d'un deuxième tube (10), le procédé comprend les étapes de tuliper cette portion d'extrémité du deuxième tube, de retourner vers l'extérieur la portion d'extrémité (7) du premier tube (1), la couche de surface soudable (5) étant située initialement à l'intérieur du premier tube, d'introduire la portion d'extrémité retournée du premier tube dans la portion d'extrémité tulipée du deuxième tube et de souder par friction celles-ci l'une à l'autre.

6. Procédé selon la revendication 1, dans lequel le retournement est réalisée jusqu'à appliquer la portion d'extrémité (7) retournée contre une partie (8) non retournée du tube.

7. Procédé selon la revendication 1, dans lequel le retournement est réalisé en appliquant la portion d'extrémité (7) du tube (1) contre un outil (100) comprenant une surface de conformation formée d'une gorge (101) annulaire plane ayant un fond incurvé (102) pour amorcer le retournement et bordé par un premier flanc (103) formé d'une surface cylindrique coaxiale de guidage de la portion d'extrémité du tube vers le fond de la gorge et un deuxième flanc (104) divergeant par rapport au premier flanc.

8. Procédé selon la revendication 7, dans lequel le retournement comprend une phase de réalisation d'une ébauche au moyen dudit outil, la portion d'extrémité (7) ébauchée formant un angle aigu avec une partie non retournée (8) du tube, et une phase de finition en appliquant la portion d'extrémité (7) ébauchée contre un deuxième outil (200) comprenant une surface cylindrique de guidage (203) de la portion d'extrémité du tube vers une butée annulaire (204) coaxiale agencée pour rabattre la portion d'extrémité (7) contre la partie non retournée (8) du tube.

9. Procédé selon la revendication 7 ou la revendication 8, dans lequel le retournement est effectué à chaud.

10. Ensemble d'un tube raccordé à un canal d'un élément, le tube (1) étant multicouche, **caractérisé par le fait qu'**il possède une portion d'extrémité retournée (7) ayant une couche de surface (5) soudée à au moins une paroi (4) sensiblement annulaire de l'élément (3).

11. Ensemble selon la revendication 10, dans lequel l'élément (20) comporté deux parois (23, 24) sensiblement annulaires et coaxiales l'une à l'autre agencées de telle manière que la couche de surface (5) soit soudée aux deux parois à l'intérieur et à l'extérieur de la portion d'extrémité retournée (7).

12. Ensemble selon la revendication 10, dans lequel l'élément est une portion d'extrémité tulipée (11) d'un deuxième tube (10), la portion d'extrémité (7) retournée du premier tube (1) étant soudée.dans la portion d'extrémité tulipée du deuxième tube (10).

## Patentansprüche

1. Verfahren zum Verbinden eines Endabschnitts (7, 57) eines mehrschichtigen Rohres (1,51) mit einem Kanal (2) eines Elements (3, 20), wobei mindestens der Endabschnitt des Rohres eine Oberflächenschicht (5) umfasst, die an mindestens eine im Wesentlichen ringförmige Wand (4, 23, 24) des Elements geschweißt werden kann, wobei das Verfahren den Schritt umfasst, den Abschnitt der Oberflächenschicht des Endabschnitts des Rohres gegen die Wand des Elements zu reiben, um durch Reibung den Endabschnitt des Rohres mit dem Element zu verschweißen, **dadurch gekennzeichnet, dass** das Verfahren den vorherigen Schritt umfasst, den Endabschnitt so umzuschlagen, dass sich der Abschnitt der Oberflächenschicht des Endabschnitts gegenüber der Wand des Elements erstreckt.

2. Verfahren nach Anspruch 1, bei dem sich die Oberflächenschicht (56) an einer Außenseite des Rohres (51) befindet und bei der der Endabschnitt (57) in Richtung des Rohrinneren umgeschlagen wird.

3. Verfahren nach Anspruch 1, bei dem sich die Oberflächenschicht (5) an einer Innenseite des Rohrs (1) befindet und der Endabschnitt (7) in Richtung der Außenseite des Rohrs umgeschlagen wird.

4. Verfahren nach Anspruch 1, bei dem das Element (20) zwei Wände (23, 24) umfasst, die im Wesentlichen ringförmig und koaxial zueinander ausgebildet sind, so dass die Oberflächenschicht (5) beim Reibungsschweißen im Inneren und im Äußeren des umgeschlagenen Endabschnittes (7) in Kontakt mit den beiden Wänden ist.

5. Verfahren nach Anspruch 1, bei dem das Element ein Endabschnitt (11) eines zweiten Rohrs (10) ist, wobei das Verfahren die Schritte umfasst, diesen Endabschnitt des zweiten Rohrs in eine Glockenform zu bringen, den Endabschnitt (7) des ersten Rohrs (1) nach außen umzuschlagen, wobei sich die schweißbare Oberflächenschicht (5) ursprünglich im Inneren des ersten Rohrs befindet, den umgeschlagenen Endabschnitt des ersten Rohrs in den glockenförmigen Endabschnitt des zweiten Rohrs einzubringen und durch Reibungsschweißen diese miteinander zu verschweißen.

6. Verfahren nach Anspruch 1, bei dem das Umschlagen so weit durchgeführt wird, bis der umgeschlagene Endabschnitt (7) an einem nicht umgeschlagenen Abschnitt (8) des Rohrs anliegt.

7. Verfahren nach Anspruch 1, bei dem das Umschlagen durchgeführt wird, indem der Endabschnitt (7) des Rohrs (1) an ein Werkzeug (100) angelegt wird, umfassend eine Formgebungs-Oberfläche, die von einer ringförmigen, glatten Auskehlung (101) mit einem Boden (102) gebildet ist, der gekrümmt ist, um das Umschlagen zu veranlassen, und der von einer ersten Seitenwand (103), die von einer zylindrischen koaxialen Oberfläche zur Führung des Endabschnitts des Rohrs in Richtung des Bodens der Auskehlung gebildet wird und von einer zweiten Seitenwand (104) begrenzt ist, die relativ zur ersten Seitenwand divergiert.

8. Verfahren nach Anspruch 7, bei dem das Umschlagen eine Phase der Herstellung einer Vorform mit Hilfe des besagten Werkzeugs umfasst, wobei der vorgeformte Endabschnitt (7) mit einem nicht umgeschlagenen Teil (8) des Rohres einen spitzen Winkel bildet, und eine Fertigstellungsphase umfasst, indem der vorgeformte Endabschnitt (7) an ein zweites Werkzeug (200) angelegt wird, das eine zylindrische Führungsoberfläche (203) zur Führung des Endabschnitts des Rohres in Richtung eines ringförmigen Anschlags (204) umfasst, der koaxial ausgebildet ist, um den Endabschnitt (7) gegen den nicht gewendeten Abschnitt (8) des Rohrs zu biegen.

9. Verfahren nach Anspruch 7 oder Anspruch 8, bei dem das Umschlagen unter Wärme stattfindet.

10. Anordnung eines mit einem Kanal eines Element verbundenen Rohres, wobei das Rohr (1) mehrschichtig ist, **dadurch gekennzeichnet, dass** sie einen umgeschlagenen Endabschnitt (7) besitzt, der eine Oberflächenschicht (5) aufweist, die an mindestens eine im Wesentlichen ringförmige Wand (4) des Elements (3) geschweißt ist.

11. Anordnung nach Anspruch 10, bei dem das Element (20) zwei Wände (23, 24) aufweist, die im Wesentlichen ringförmig und koaxial zueinander sind und so ausgebildet sind, dass die Oberflächenschicht (5) im Inneren und im Äußeren des umgeschlagenen Endabschnitts (7) an die zwei Wände geschweißt ist.

12. Anordnung nach Anspruch 10, bei dem das Element ein glockenförmiger Endabschnitt (11) eines zweiten Rohrs (10) ist, wobei der umgeschlagene Endabschnitt (7) des ersten Rohrs (1) in den glockenförmigen Endabschnitt des zweiten Rohrs (10) geschweißt ist.

## Claims

1. A method of connecting an end portion (7, 57) of a multilayer tube (1, 51) to a channel (2) of an element (3, 20), at least the end portion of the tube including a surface layer (5) that is weldable to at least one substantially annular wall (4, 23, 24) of the element, the method including the step of causing an area of the surface layer of the end portion of the tube to rub against the wall of the element so as to friction-weld the end portion of the tube to the element, the method being **characterized in that** it includes a prior step of turning back the end portion onto itself in such a manner that the area of the surface layer of the end portion extends facing the wall of the element.

2. A method according to claim 1, wherein the surface layer (56) is situated on an outside of the tube (51) and the end portion (57) is turned back towards the inside of the tube.

3. A method according to claim 1, wherein the surface layer (5) is situated on the inside of the tube (1) and the end portion (7) is turned back towards the outside of the tube.

4. A method according to claim 1, wherein the element (20) has two substantially annular walls (23, 24) that are coaxial with each other and arranged in such a manner that the surface layer (5) is in contact with both walls during friction-welding, on the inside and on the outside of the turned-back end portion (7).

5. A method according to claim 1, wherein the element is an end portion (11) of a second tube (10), the method comprising the steps of belling said end portion of the second tube, of turning the end portion (7) of the first tube (1) back towards the outside, the weldable surface layer (5) being situated initially on the inside of the first tube, of inserting the turned-back end portion of the first tube in the belled end portion of the second tube, and of friction-welding them together.

6. A method according to claim 1, wherein turning back is performed so as to press the turned-back end portion (7) against a non-turned-back portion (8) of the tube.

7. A method according to claim 1, wherein turning back is performed by pressing the end portion (7) of the tube (1) against a tool (100) having a shaping surface formed with a plane annular groove (101) having a curved bottom (102) for initiating turning back and bounded by a first flank (103) formed by a coaxial cylindrical surface for guiding the end portion of the tube towards the bottom of the groove, and a second flank (104) that diverges relative to the first flank.

8. A method according to claim 7, wherein turning back comprises a roughing-out stage performed by means of said tool, the roughed-out end portion (7) forming an acute angle relative to the non-turned-back portion (8) of the tube, and a finishing stage in which the roughed-out end portion (7) is pressed against a second tool (200) having a cylindrical guide surface (203) for guiding the end portion of the tube towards a coaxial annular abutment (204) arranged to hold down the end portion (7) against the non-turned-back portion (8) of the tube.

9. A method according to claim 7 or claim 8, wherein turning back is performed hot.

10. An assembly comprising a tube connected to a channel of an element, the tube (1) being a multilayer tube, **characterized in that** it possesses a turned-back end portion (7) having a surface layer (5) welded to at least one substantially annular wall (4) of the element (3).

11. An assembly according to claim 10, wherein the element (20) has two substantially annular walls (23, 24) that are coaxial with each other and arranged in such a manner that the surface layer (5) is welded to both walls on the inside and on the outside of the turned-back end portion (7).

12. An assembly according to claim 10, wherein the element is a belled end portion (11) of a second tube (10), the turned-back end portion (7) of the first tube (1) being welded inside the belled end portion of the second tube (10).
